Europäisches Patentamt

European Patent Office

Office européen des brevets

(11) Veröffentlichungsnummer: **0 381 805**
**A2**

# (12) EUROPÄISCHE PATENTANMELDUNG

(21) Anmeldenummer: **89112475.2**

(22) Anmeldetag: **07.07.89**

(51) Int. Cl.⁵: **B62K 21/16**

(30) Priorität: **08.02.89 DE 3903712**

(43) Veröffentlichungstag der Anmeldung:
**16.08.90 Patentblatt 90/33**

(84) Benannte Vertragsstaaten:
**AT CH DE FR GB IT LI**

(71) Anmelder: **K.W. HOCHSCHORNER GMBH**
**Fraunhofer Strasse 16**
**D-8033 Martinsried(DE)**

(72) Erfinder: **Kummer, Sebastian**
**Ohlmüllerstrasse 6**
**D-8000 München 90(DE)**

(74) Vertreter: **Heim, Hans-Karl, Dipl.-Ing. et al**
**c/o Weber & Heim Hofbrunnstrasse 36**
**D-8000 München 71(DE)**

(54) **Lenkervorbau.**

(57) Bei einem Lenkervorbau mit einem in einem Gabelrohr fixierbaren, insbesondere verklemmbaren Befestigungsrohr und einer Halterung für eine Lenkstange läßt sich die Lenkstange häufig verstellen, ohne daß die Funktionstüchtigkeit und Betriebssicherheit des Lenkervorbaus gemindert wird, wenn das Befestigungsrohr und die Halterung über eine verstellbare Verbindungseinrichtung miteinander verbindbar sind und die Verbindungseinrichtung zwei im Verstellbereich relativ zueinander verschiebbare und festlegbare Profile aufweist, wobei das erste Profil mit dem Befestigungsrohr und das zweite Profil mit der Halterung verbunden sind.

Fig. 1

EP 0 381 805 A2

## Lenkervorbau

Die Erfindung betrifft einen Lenkervorbau mit einem in einem Gabelrohr fixierbaren, insbesondere verklemmbaren Befestigungsrohr und einer Halterung mit einer Lenkstange, gemäß Oberbegriff des Anspruchs 1.

Es ist bekannt, einen Lenkervorbau der gattungsgemäßen Art für ein Zweirad zu verwenden. Im Steuerrohr des Zweirades ist ein mit einer Vorderradgabel verbundenes Gabelrohr drehbar gelagert. In dem Gabelrohr wird das Befestigungsrohr des Lenkervorbaus in bekannter Weise durch einen Klemmkonus relativ zum Gabelrohr höhenverstellbar festgelegt. Auf diese Weise kann die Lenkstange in eine geeignete Höhe und weiterhin so eingestellt werden, daß die Lenkstange im wesentlichen senkrecht zur Ebene des Vorderrades liegt. Soll das Zweirad transportiert werden, so läßt sich durch Lösen des Klemmkonus die Lenkstange in eine parallel zur Vorderradebene gerichtete Stellung verdrehen, was den Platzbedarf des Zweirades für einen Transport senkt.

Bei jedem Verstellen der Lenkstange muß so der Klemmkonus gelockert und wieder festgezogen werden. Der Klemmkonus hingegen ist nicht für ein häufiges Lockern und Festziehen konstruiert, so daß bei einem häufigerem Verstellen der Lenkstange mit einem Nachlassen der Funktionstüchtigkeit des Lenkervorbaus gerechnet werden muß.

Es ist Aufgabe der Erfindung, einen Lenkervorbau der gattungsgemäßen Art zu schaffen, der ein häufiges Verstellen der Lenkstange ermöglicht, ohne daß die Funktionstüchtigkeit und Betriebssicherheit des Lenkervorbaus gemindert wird.

Die Aufgabe wird bei einem Lenkervorbau der gattungsgemäßen Art erfindungsgemäß dadurch gelöst, daß das Befestigungsrohr und die Halterung über eine verstellbare Verbindungseinrichtung miteinander verbindbar sind, und daß die Verbindungseinrichtung zwei im Verstellbereich relativ zueinander verschieb bare und festlegbare Profile aufweist, wobei das erste Profil mit dem Befestigungsrohr und das zweite Profil mit der Halterung verbunden sind.

Hierdurch kann die Lenkstange verstellt werden, ohne daß der Klemmkonus zur Fixierung des Befestigungsrohrs im Gabelrohr gelöst werden muß. Die für die Betriebssicherheit des Fahrrades wichtige Befestigung des Befestigungsrohrs im Gabelrohr bleibt daher auch nach oftmaligen Verstellen des Lenkers funktionssicher. Die Verbindungseinrichtung hingegen ist für ein häufiges Verstellen konzipiert, so daß hier kein Nachlassen der Funktionssicherheit zu erwarten ist.

Die Profile sind z. B. in der Form von länglichen leistenförmigen Profilen ausgebildet, die großflächig aneinander liegen. Je nach Neigung der Profile relativ zum Befestigungsrohr wird die Lenkstange an dem Fahrrad nicht nur in ihrer Höhe, sondern auch noch in ihrer Entfernung zum Sattel verstellt. Diese Art der Verstellung ist vorteilhaft, wenn ein Rad von mehreren unterschiedlich großen Personen benutzt werden soll.

Wenn die Profile rotationssymmetrisch um ihre Längsachse z.B. als Rohre ausgebildet sind, kann der Lenker um diese Rotationsachse in der Weise verdreht werden. daß er parallel zur Ebene des Fahrradrahmens liegt. Hierdurch nimmt das Zweirad beim Transport weniger Platz ein. Um den Anforderungen von Rohrstabilität und geringem Gewicht Rechnung zu tragen, ist der Lenkervorbau vorteilhafter Weise aus Leichmetallegierungen hergestellt.

Wenn die Profile stufenlos gegeneinander verschiebbar sind, ist die Lenkstange in einer optimalen Stellung justierbar. In einer vorteilhaften Weiterbildung sind das erste Profil und das zweite Profil als ineinander steckbare Zyiinder unterschiedlicher Durchmessers ausgebildet, wobei der Außendurchmesser des inneren Zylinders im wesentlichen dem Innendurchmesser des äußeren Zylinders entspricht Die Längenversteiibarkeit dieser Verbindungseinrichtung entsteht durch teleskopartiges Auseinanderziehen oder Ineinanderstecken der beiden Zylinder. Diese Verbindungseinrichtung gewährleistet eine hohe mechanische Stabilität. Die Zylinder können eine ovale oder polygone Grundfläche haben. Wenn die Zylinder eine kreisrunde Grundfläche haben, läßt sich die Lenkstange um die Zylinderachse verdrehen und somit leicht in einer Transportstellung festlegen.

Um den äußeren Zylinder an dem inneren Zylinder form- und/oder kraftschlüssig festlegen zu können, ist an dem freien Ende des äußeren Zylinders eine durch eine Schraubenanordnung oder einen Schnellspannverschluß verspannbare Klemme ausgebildet. Eine derartige Klemmvorrichtung ist für häufiges Öffnen und Festziehen konzipiert und bleibt daher auch nach vielen Verstellvorgängen funktionssicher.

Da an die zur Befestigung der Lenkstange dienenden Teile hohe Sicherheitsanforderungen zu stellen sind, ist es vorteilhaft, wenn der Lenker im Längenverstellbereich gegen Verdrehen um die Zylinderachse gesichert ist. Dies wird in vorteilhafter Weise dadurch erreicht, daß in der Außenwand des inneren Zylinders eine in Längsrichtung weisende Führungsnut ausgebildet ist, in die ein von der Innenwand des äußeren Zylinders abstehender Führungsstift eingreift.

In einer sehr betriebssicheren Weiterbildung der Erfindung definiert die Lage des Führungsstiftes an den Längsenden des Führungsnut die Grenzen des Verschiebebereichs der Zylinder zueinander. Die Zylinder können dann nicht über diesen Verstellbereich hinaus verstellt und auch nicht voneinander getrennt werden. Falls sich die Klemme zum Festlegen einer bestimmten Einstellung der Zylinder zueinander einmal lösen sollte, wird der Lenker an dem äußeren Anschlag des Verstellbereichs durch den in die Führungsnut eingreifenden Führungsstift gehalten. Außerdem wird durch die Länge der Führungsnut ein Verstellbereich festgelegt, in dem die Verbindungsfunktion der Verbindungseinrichtung noch einwandfrei ist. Die Zylinder können also nicht soweit auseinander gezogen werden, daß sie nur noch zu einem geringen Teil überlappen, was der mechanischen Stabilität der Verbindungseinrichtung abträglich wäre.

Wenn die Führungsnut an einem Längsende in eine ringförmig die Außenwand des inneren Zylinders durchsetzende Aussparung einmündet, kann die Lenkstange in einer definierten Stellung im Längenverstellbereich der Zylinder um die Zylinderachse verdreht werden. Um die Verdrehung zu ermöglichen, müssen die Zylinder zuvor in die am weitesten ineinander geschobene oder am weitesten auseinander gezogene Stellung relativ zueinander verstellt werden. Auch bei der Verdrehung des Lenkers greift der Führungsstift des äußeren Zylinders in die ringförmige Aussparung und verhindert, daß die beiden Zylinder bei der Verdrehung der Lenkstange noch längenverstellt oder voneinander gelöst werden können.

Statt einer Verstellung mit Führungsstift, Führungsnut und Klemme kann die Verbindungseinrichtung auch so ausgebildet sein, daß der innere oder der äußere Zylinder radiale, in Längsrichtung versetzte erste Durchbrechungen aufweist, und daß der jeweils andere Zylinder mindestens eine zweite Durchbrechung aufweist, die in definierten Stellungen der Zylinder zueinander konzentrisch zu einer ersten Durchbrechung liegt, wobei die konzentrisch liegenden Durchbrechungen von mindestens einem stift- oder schraubenförmigen Festlegeelement durchsetzbar sind. Die Verstellung erfolgt hierbei in diskreten Stufen, ist jedoch technisch einfach zu realisieren.

Bei der Verstellung der Lenkstange anhand der Verbindungseinrichtung läßt sich eine Höhenverstellung und eine Längenverstellung der Lenkstange relativ zum Fahrradrahmen und zum Fahrradsattel erreichen, wenn das Befestigungsrohr mit dem zweiten Profil einen Winkel von 60° bis 150° bildet. Die Lenkstange wird z.B. nur in ihrer Entfernung zum Sattel verstellt, wenn das Befestigungsrohr mit dem zweiten Profil einen Winkel von 90° bildet. Bildet das Befestigungsrohr mit dem zweiten Profil einen Winkel von 135°, so erfolgt mit der Verstellung der Distanz zum Fahrradsattel auch eine Verstellung der Höhe bezogen auf den Fahrradrahmen.

Vorteilhafte Weiterbildungen der Erfindung sind Gegenstand der Unteransprüche.

Die Erfindung wird nachfolgend anhand der schematischen Zeichnung beschrieben. Es zeigen:

Fig. 1 eine perspektivische Ansicht eines Lenkervorbaus;

Fig. 2 eine vergrößerte Seitenansicht der Verbindungseinrichtung des Lenkervorbaus aus Fig. 1 bei auseinandergezogenen Profilen,

Fig. 3 eine vergrößerte Ansicht III aus Fig. 2,

Fig. 4 eine Ansicht gemäß Fig. 3 mit einem modifizierten ersten Vorbauteil und

Fig. 5 eine Ansicht gemäß Fig. 4 mit einem Schnellspannverschluß.

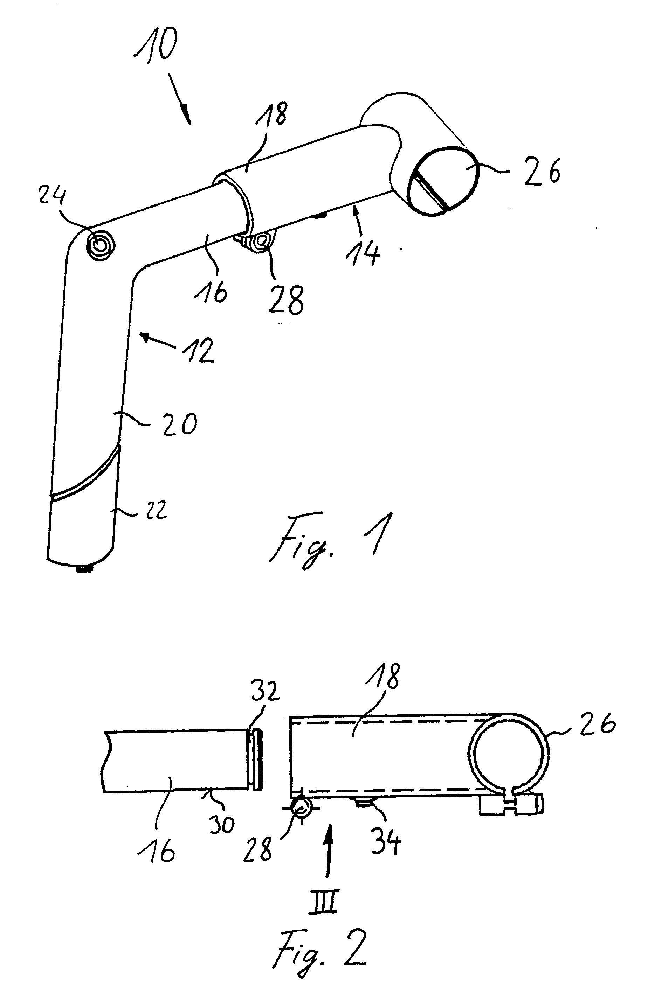

Figur 1 zeigt einen Lenkervorbau 10 zum Befestigen einer Lenkstange in dem Gabelrohr eines Fahrrades. Der Lenkervorbau kann jedoch auch in anderen Zweirädern oder Heimtrainern verwendet werden. Der Lenkervorbau 10 besteht aus zwei miteinander verbindbaren Vorbauteilen 12, 14, die an ihrem einen Längsende als teleskopartig ineinander steckbare innerer bzw. äußerer Zyiinder 16 bzw. 18 ausgebildet sind. Das erste Vorbauteil 12 hat ein zylindrisches Befestigungsrohr 20 zum Festlegen in dem Gabelrohr eines Fahrrades. Hierfür ist an dem freien Ende des Befestigungsrohres 20 in bekannter Weise ein Klemmkonus 22 angeordnet, der über eine Schraube 24 relativ zum Befestigungsrohr 20 verstellbar und damit verspreizbar ist. Das eine Ende des ersten Vorbauteils 12 ist als innerer Zylinder 16 ausgebildet und in dem äußeren Zylinder 18 des zweiten Vorbauteils 14 eingeführt. Das andere Ende des zweiten Vorbauteils 14 ist als Klemmschelle 26 zur Aufnahme einer Lenkstange ausgebildet. Der äußere Zylinder 18 des zweiten Vorbauteils 14 hat eine parallel zur Zylinderachse gerichtete längliche Aussparung 27. Die Zylindermantelabschnitte beiderseitig der länglichen Aussparung 27 sind über eine Spannschraube verspannbar, wodurch sich der Innendurchmesser des äußeren Zylinders 18 verringert. Dieser läßt sich somit an dem inneren Zylinder 16 des ersten Verbindungsteils 12 in einer beliebigen Stellung innerhalb eines nachfolgend noch näher beschriebenen Verstellbereichs festlegen.

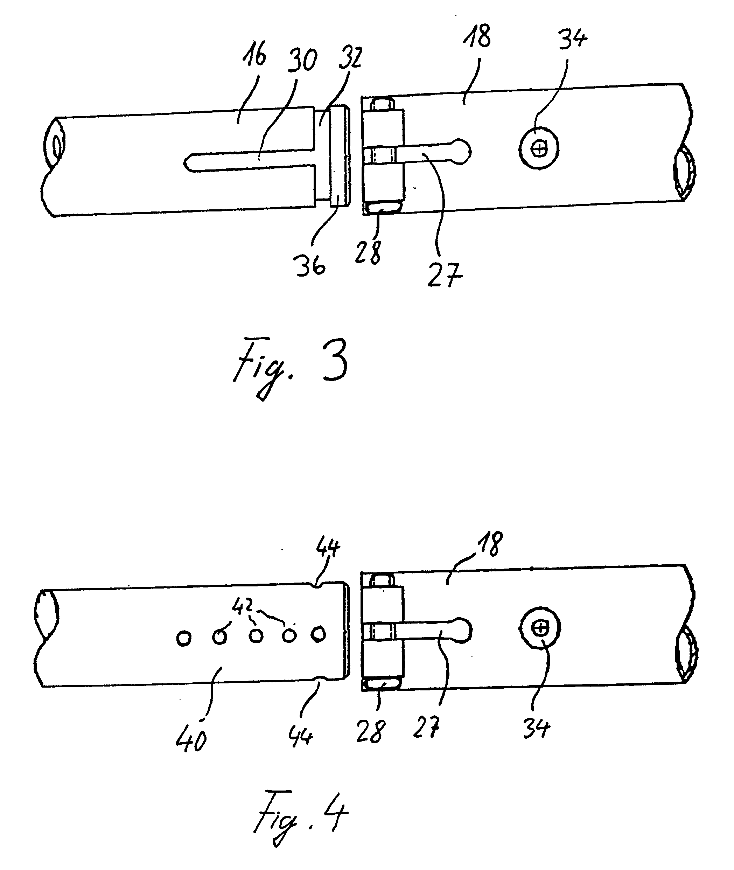

Die Verbindungseinrichtung 16, 18 der beiden Vorbauteile 12, 14 wird anhand der Figuren 2 und 3 näher beschrieben.

Der innere Zylinder 16 des ersten Vorbauteils 12 hat einen Außendurchmesser, der im wesentlichen gleich dem Innendurchmesser des äußeren Zylinders 18 des zweiten Vorbauteils 14 ist, so daß der innere Zylinder 16 in dem äußeren Zylinder 18 mit möglichst wenig Spiel, aber noch leichtgängig, verschiebbar ist.

In die äußere Mantelfläche des inneren Zylinders 16 ist eine Führungsnut 30 parallel zur Zylinderachse eingefräst, die an ihrem dem freien Ende des inneren Zylinders 16 zugewandten Längsende in einer die Mantelfläche des inneren Zylinders 16 ringförmig umgebende Aussparung 32 einmündet. In dem äußeren Zylinder 18 ist ein Führungsstift 34 eingeschraubt. Zum Verbinden und Lösen der beiden Vorbauteile 12,14 muß der Führungsstift 34 aus dem äußeren Zylinder 18 zumindest soweit herausgeschraubt sein, daß er an dem durch die ringförmige Aussparung 32 gebildeten ringförmigen Vorsprung 36 nicht anstößt. Wenn der innere Zylinder 16 in den äußeren Zylinder 18 eingeführt ist, wird der Führungsstift in die längliche Führungsnut 30 oder der ringförmigen Aussparung 32 eingeschraubt. Der innere Zylinder 16 ist hiermit relativ zum äußeren Zylinder 18 bei gelöster Spannschraube 28 nur noch in einem Bereich bewegbar, der durch die Bewegung des Führungsstifts 34 in der Führungsnut 30 und der ringförmigen Aussparung 32 vorgegeben ist. Dies verhindert ein vollständiges Ablösen der beiden Vorbauteile 12,14 voneinander, falls sich die Spannschraube 28 während der Fahrt lockern sollte oder nicht fest genug angezogen wurde. Innerhalb dieses Bereiches sind die beiden Vorbauteile 12,14 relativ zueinander durch die Spannschraube 28 festlegbar. Die längliche Führungsnut 30 gestattet eine teleskopartige Längenverstellbarkeit der beiden Zylinder 16,18 zueinander. Sie können lediglich am Ende des Verstellbereiches durch die Bewegung des Führungsstiftes 34 in der ringförmigen Aussparung 32 relativ zueinander verdreht werden, wodurch sich die Lenkstange z.B. zum Transportieren in eine Lage schwenken läßt, in der sie parallel zur Ebene des Fahrrades oder des Vorderrades liegt.

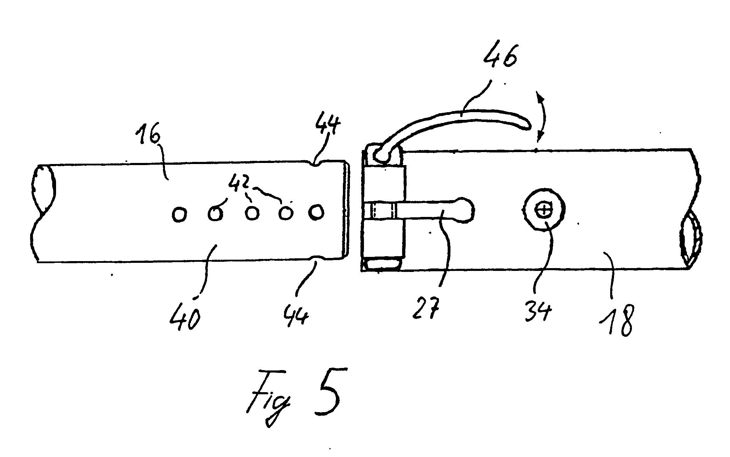

Figur 4 zeigt eine weitere Ausführungsform einer Verbindungseinrichtung mit einem modifizierten ersten Vorbauteil 40. Identische Teile sind mit identischen Bezugszeichen versehen.

Das erste Vorbauteil 40 ist wie das erste Vorbauteil 12 aus Figur 1 und 2 als innerer Zylinder ausgebildet. Die Führungsnut 30 und die Aussparung 32 des Vorbauteils 12 aus Figur 1 und 2 sind hier jedoch durch radiale Durchbrechungen 42 ersetzt, die parallel zur Zylinderachse angeordnet sind. Der Führungsstift 34 des äußeren Zylinders 18 ist hier in vorteilhafter Weise federnd gegen den im äußeren Zylinder 18 befindlichen inneren Zylinder 40 vorgespannt, wobei die Lage der Zylinder 18,40 zueinander bei gelöster Spannschraube 28 durch das Zurückziehen des Führungsstiftes 34 aus einer der Durchbrechungen 42 freigegeben und durch Einrasten des Führungsstiftes 34 in eine der Aussparungen 42 und Festziehen der Spannschraube 28 festgelegt wird. Die Lage der Längsstange läßt sich auch in einer Transportstellung festlegen. Hierbei rastet der Führungsstift 34 des äußeren Zylinders 18 in eine 90° relativ zu den Aussparungen 42 um die Zylinderachse versetzte Transportaussparung 44. Das Festziehen der Spannschraube 28 in der Transportlage der Lenkstange ist hier nicht erforderlich. Diese Verstelleinrichtung erlaubt eine Verstellung der Zylinder 18,40 zueinander in diskreten Stufen und ist technisch einfach und kostengünstig zu realisieren.

Der oben beschriebene Lenkervorbau ist besonders bei Mountain-Bikes von Vorteil, weil hier oft nur zwei bis drei Rahmengrößen vorhanden sind und somit eine Verstellbarkeit der Lenkstange in Längsrichtung des Rahmens, z.B. um 30 mm, eine optimale Anpassung des Abstandes zwischen Sattel und Lenkstange an die Größenverhältnisse eines Mountain-Bike-Fahrers ermöglicht. Bei einer Abwärtsfahrt mit dem Mountain-Bike kann zusätzlich zum Sattel noch die Lenkstange nach hinten verstellt werden was eine Gewichtsverlagerung nach hinten unter Beibehaltung des Abstandes zwischen Sattel und Lenkstange ermöglicht. Der Fahrer kann somit auch bei einer Abwärtsfahrt seine optimale Sitzposition beibehalten.

Die Lenkstange läßt sich schnell und einfach um die Zylinderachse in eine Transportstellung verschwenken, wenn die Schraube 28 durch einen Schnellspannverschluß gebildet ist. Dies ist vorteilhaft für Räder, die von einem häufig wechselnden Personenkreis benutzt werden, z.B. die Räder eines Radtouren-Veranstalters. Der geringere Platzbedarf des Rades macht sich sowohl beim Dachtransport, wie auch beim Anhängertransport eines Rades positiv bemerkbar.

Fig. 5 zeigt eine Ausführungsform der Verbindungseinrichtung gemäß Fig. 4. Identische Teile sind hierbei mit identischen Bezugszeichen versehen.

In Fig. 5 ist der äußere Zylinder 18 an dem inneren Zylinder 16 nicht mit einer Spannschraube 28 festgeklemmt, sondern mit einem Schnellspannverschluß 46, wie er zur Befestigung von Rädern in Fahrradrahmen bekannt ist.

**Ansprüche**

1. Lenkervorbau mit einem in einem Gabelrohr fixierbaren, insbesondere verklemmbaren, Befestigungsrohr und einer Halterung für eine Lenkstange, dadurch **gekennzeichnet,**
daß das Befestigungsrohr (20) und die Halterung (26) über eine verstellbare Verbindungseinrichtung miteinander verbindbar sind, und
daß die Verbindungseinrichtung (16,18) zwei im Verstellbereich relativ zueinander verschiebbare und festlegbare Profilen (16,18) aufweist, wobei das erste Profil (16) mit dem Befestigungsrohr (20) und das zweite Profil (18) mit der Halterung (26) verbunden sind.

2. Lenkervorbau nach Anspruch 1,
dadurch **gekennzeichnet,**
daß die beiden Profile (16,18) in einem definierten Verstellbereich stufenlos gegeneinander verschiebbar sind.

3. Lenkervorbau nach Anspruch 1 oder 2,
dadurch **gekennzeichnet,**
daß das erste Profil (16) und das zweite Profil (18) als ineinander steckbare Zylinder unterschiedlichen Durchmessers ausgebildet sind, wobei der Außendurchmesser des inneren Zylinders (16) im wesentlichen dem Innendurchmesser des äußeren Zylinders (18) entspricht.

4. Lenkervorbau nach Anspruch 3,
dadurch **gekennzeichnet,**
daß die Zylinder (16,18) eine kreisrunde Grundfläche haben und relativ zueinander um die Zylinderachse verdrehbar sind.

5. Lenkervorbau nach Anspruch 3 oder 4,
dadurch **gekennzeichnet,**
daß an dem freien Ende des äußeren Zylinders (18) eine durch eine Schraubenanordnung (28) oder einen Schnellspannverschluß verspannbare Klemme ausgebildet ist, durch die der äußere Zylinder (18) am inneren Zylinder (16) form- und/oder kraftschlüssig festlegbar ist.

6. Lenkervorbau nach einem der Ansprüche 3 bis 5,
dadurch **gekennzeichnet,**
daß in der Außenwand des inneren Zylinders (16) eine in Längsrichtung weisende Führungsnut (30) ausgebildet ist, in die ein von der Innenwand des äußeren Zylinders (18) abstehender Führungsstift (34) eingreift.

7. Lenkervorbau nach Anspruch 6,
dadurch **gekennzeichnet,**
daß die Lage des Führungsstiftes(34) an den Längsenden der Führungsnut (30) die Grenzen des Verschiebebereichs der Zylinder (16,18) zueinander definiert.

8. Lenkervorbau nach Anspruch 6 oder 7,
dadurch **gekennzeichnet,**
daß die Führungsnut (30) an einem Längsende in eine ringförmig die Außenwand des inneren Zylinders (16) durchsetzende Aussparung (32) einmündet.

9. Lenkervorbau nach einem der Ansprüche 6 bis 8,
dadurch **gekennzeichnet,**
daß der Führungsstift (34) durch eine in den äußeren Zylinder (18) radial einschraubbare Schraube gebildet ist.

10. Lenkervorbau nach einem der Ansprüche 3 bis 9,
dadurch **gekennzeichnet,**
daß der innere oder der äußere Zylinder (40 oder 18) radiale, in Längsrichtung versetzte erste Durchbrechungen (42) aufweist, und daß der jeweils andere Zylinder mindestens eine zweite Durchbrechung aufweist, die in definierten Stellungen der Zylinder zueinander konzentrisch zu einer ersten Durchbrechung liegt, wobei die konzentrisch liegenden Durchbrechungen von mindestens einem stift- oder schraubenförmigen Festlegeelement(34) durchsetzbar sind.

11. Lenkervorbau nach einem der Ansprüche 1 bis 10,
dadurch **gekennzeichnet,**
daß das Befestigungsrohr (20) mit dem zweiten Profil (12,40) einen Winkel von 60° bis 150°, insbesondere 110° bis 135°; bildet.

Fig. 1

Fig. 2

Fig. 3

Fig. 4

Fig 5